Europäisches Patentamt

European Patent Office

Office européen des brevets

(19)

(11) Publication number: **0 187 400**
**B1**

(12) **EUROPEAN PATENT SPECIFICATION**

(45) Date of publication of patent specification: **14.06.89**

(21) Application number: **85201931.4**

(22) Date of filing: **22.11.85**

(51) Int. Cl.⁴: **H 01 S 3/08,** G 02 B 5/08,
G 02 F 1/00

(54) Multilayer optical component.

(30) Priority: **17.12.84 NL 8403816**

(43) Date of publication of application:
**16.07.86 Bulletin 86/29**

(45) Publication of the grant of the patent:
**14.06.89 Bulletin 89/24**

(84) Designated Contracting States:
**CH DE FR GB LI NL**

(56) References cited:
GB-A-2 006 456
GB-A-2 020 842
US-A-4 222 668

T. TAMIR et al.: "Integrated optics", 2nd
edition, July 1979, pages 243-304, Springer-
Verlag, Berlin, DE; E. GARMIRE:
"Semiconductor components for monolithic
applications"

IEEE TRANSACTIONS ON MAGNETICS, vol.
MAG-16, no. 5, September 1980, pages 1179-
1184, IEEE, New York, US; J.J. KREBS et al.:
"Applications of magneto-optics in ring laser
gyroscopes"

(73) Proprietor: **N.V. Philips' Gloeilampenfabrieken**
**Groenewoudseweg 1**
**NL-5621 BA Eindhoven (NL)**

(72) Inventor: **Haisma, Jan**
**c/o INT. OCTROOIBUREAU B.V. Prof. Holstlaan 6**
**NL-5656 AA Eindhoven (NL)**
Inventor: **Van der Werf, Pieter**
**c/o INT. OCTROOIBUREAU B.V. Prof. Holstlaan 6**
**NL-5656 AA Eindhoven (NL)**

(74) Representative: **Auwerda, Cornelis Petrus et al**
**INTERNATIONAAL OCTROOIBUREAU B.V. Prof.**
**Holstlaan 6**
**NL-5656 AA Eindhoven (NL)**

## Description

The invention relates to a multilayer optical component in thin-film technology for handling electromagnetic radiation in the visible and/or infrared spectral range which is incident transversely to the plane of the component, having a substrate which supports a stack of thin-film layers with alternately a high and a low refractive index. Moreover, the invention relates to a laser comprising such an optical component.

An optical component for handling electromagnetic radiation which is incident transversely to the plane is to be understood to mean herein a system of layers having reflecting or anti-reflecting properties with regard to electromagnetic radiation of a given wavelength.

A system of layers having reflecting properties and constructed as a multilayer thin-film component is known from GB—A—2,020,842. The reflector described in said Application comprises a number (7—9) of dielectric layers having alternately a high and a low refractive index and thicknesses equal to 1/4 λ, where λ is the wavelength of the radiation to be reflected. The layers have been vapour-deposited and consist alternately of kryolite and zinc sulphide, or alternately of thorium fluoride and zinc sulphide. The disadvantage of this known reflector is that it exhibits physical defects which are inherent in layers formed by vapour-deposition. They locally have an insufficiently low absorption in the wavelength range of the radiation to be reflected and are insufficiently homogeneous and so have scattering or absorption centres. As a result of this they are unfit notably for use in mirrors for high-power lasers.

It is the object of the invention to provide a multilayer optical component of the type mentioned in the opening paragraph which is well fitted for use as a mirror for high-power lasers.

According to the invention a multilayer optical component is characterized in that the substrate is a monocrystalline substrate having a lattice constant $a_o$ and that the stack of thin-film layers consists of a number of monocrystalline layers which have been grown epitaxially on the substrate and have a lattice constant which is substantially equal to $a_o$.

A practical embodiment of the optical component in accordance with the invention is characterized in that the monocrystalline layers which, taken from the substrate, have an even number consist of the same material as the substrate.

Within the scope of the invention the substrate may, for example, consist of monocrystalline gallium phosphide. Monocrystalline layers of alternately silicon and gallium phosphide may have been deposited thereon by means of hetero-epitaxy.

Alternatively, the substrate may consist of monocrystalline gallium arsenide. Monocrystalline layers of alternately silicon and gallium arsenide may have been deposited thereon by means of hetero-epitaxy.

According to a preferred form of the invention the substrate and the monocrystalline layers grown epitaxially on the substrate consist of a monocrystalline material having a garnet structure.

Epitaxial growth, for example from the liquid phase, of monocrystalline garnet layers physically speaking leads to substantially perfect layers as compared with vapour-deposited layers and which therefore have very few absorption centres and a minimum number of scattering centres. Various types of garnets can form combinations of layers having at least substantially equal lattice constants, but different values of refractive index. Dependent on the difference in refractive index a smaller or a larger number of layers with alternately a high and a low refractive index may be used to realise a desired reflection.

A practical embodiment of the invention is characterized in that the substrate is of gadolinium gallium garnet (GGG). GGG can be obtained with a very high optical quality, i.e. a minimum of physical defects and negligible optical inhomogeneities.

For handling electromagnetic radiation in the infrared spectral range a further embodiment of the invention is characterized in that the monocrystalline garnet layers having an odd number when taken from the substrate consist of a material based on yttrium iron garnet and the layers having an even number when taken from the substrate consist of gadolinium gallium garnet.

For example, when alternate layers of yttrium iron garnet (YIG) ($n=2.2$) and GGG ($n=2.0$) are grown on a GGG substrate in thicknesses optimised for reflection, it is found that the reflection with an overall number of 2 layers is 18%, with an overall number of 10 layers is 49%, and with an overall number of 16 layers is 69%.

For handling electromagnetic radiation in the optical spectral range a further embodiment of the invention is characterized in that the monocrystalline garnet layers having an odd number when taken from the substrate consist of a material based on $Y_3Al_3Sc_2O_{12}$ and the monocrystalline garnet layers having an even number when taken from the substrate consist of gadolinium gallium garnet.

Besides being useful as a reflecting or antireflecting element in lasers, the optical component according to the invention is also suitable for use in combination with an epitaxial magneto-optically active garnet layer. This may be present on the side of the stack of epitaxial monocrystalline garnet layers remote from the substrate or between the substrate and the stack of epitaxial monocrystalline garnet layers. In these cases the thicknesses of the epitaxial monocrystalline garnet layers of the stack are chosen to be so that optimum reflection occurs for the wavelength of the electromagnetic radiation to be used.

The epitaxial magneto-optically active garnet layer, however, may also be provided between a first and a second sub-stack of epitaxial layers, the thicknesses of the layers of the first stack being chosen to be so that optimum reflection occurs for the wavelength of the electromagnetic radiation to be used, the thicknesses of the layers of the second sub-stack being chosen to be so that (optimum) anti-reflection occurs for the wavelengths of the radiation to be used. In this case the first sub-stack may, for example, adjoin the substrate and the electromagnetic radiation to be treated may be incident *via* the second sub-stack.

A few embodiments of the invention will be described in greater detail, by way of example, with reference to the drawings, in which:

Figure 1 is a cross-sectional view of an optical component according to the invention having reflecting properties;

Figures 2 and 3 are diagrammatic elevations of two different combinations of an optical component according to the invention with a magneto-optically active layer;

Figure 4 shows diagrammatically a laser arrangement with two reflecting optical components according to the invention;

Figure 5 shows diagrammatically a laser arrangement having two reflecting and two anti-reflecting components according to the invention.

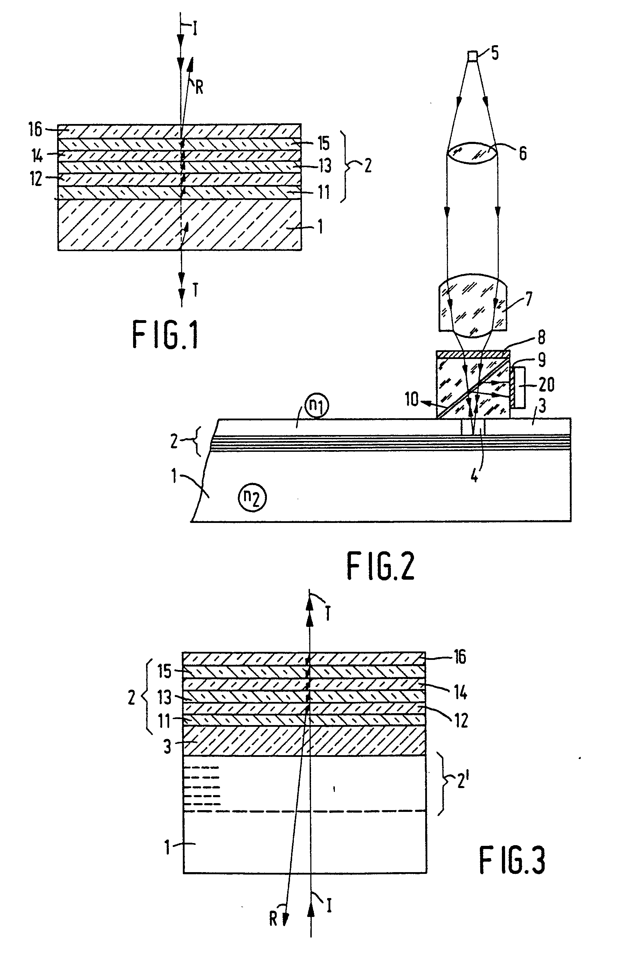

Figure 1 shows a monocrystalline substrate 1, for example, a gadolinium gallium garnet (GGG). A stack 2 of monocrystalline garnet layers 11—16 is deposited epitaxially hereon, for example, from the liquid phase. Substrate 1 with stack 2 constitutes an optical component according to the invention. As regards thickness and refractive index the layers 11—16 are optimised so as to obtain maximum reflection (they may hence be considered as 1/4 λ layers) and alternately have a first refractive index $n_1$ (the layers 11, 13, 15) and a second refractive index $n_2$ (the layers 12, 14, 16), with $n_2 < n_1$. In the case in which the layers 12, 14, 16 consist of GGG ($n_2 = 2.0$) and the layers 11, 13, 15 of YIG ($n_1 = 2.2$), the reflection is 34% ($λ = 1000$ nm).

The reflection measured directly at the substrate 1, i.e., without 1/4 λ layers, is 11%. The stack 2 may consist of more than six layers or less than six layers. The reflection as a function of the number of 1/4 λ layers is:

| Number of 1/4 λ layers | Reflection in % |
|---|---|
| 0 | 11 |
| 2 | 18 |
| 4 | 26 |
| 6 | 34 |
| 8 | 42 |
| 10 | 49 |
| 12 | 57 |
| 14 | 63 |
| 16 | 69 |

The lattice constants of GGG and YIG are sufficiently close to each other ($a_o = 12.383$ Å and $a_o = 12.377$ Å, respectively, 1 Å $= 0.1$ nm) to permit epitaxial growth.

In Figure 1 I is the incident radiation, R is the reflected radiation, and T is the transmitted radiation.

In the case where maximum reflection is not desired, but rather maximum transmission (hence a system of layers having anti-reflecting properties), the thicknesses and the refractive indices of the layers 11—16 may be optimised for that purpose.

In order to obtain an optical component which is suitable for handling electromagnetic radiation in the optical spectral range, GGG may also be used for the material of the substrate 1 and alternate layers 11, 13, 15 of $Y_3Al_3Sc_2O_{12}$ ($n = 1.8$) and layers 12, 14, 16 of GGG ($n = 2.0$) can be deposited hereon epitaxially. The lattice constants of GGG ($a_o = 12.383$ Å) and of $Y_3Al_3Sc_2O_{12}$ ($a_o = 12.38 \pm 0.01$) are sufficiently matched to each other to enable epitaxial growth.

Figure 2 shows the substrate of Figure 1 with the stack 2 of epitaxial 1/4 λ layers. In this case an epitaxial garnet layer 3 having magneto-optically active properties is grown on the stack 2. This is, for example, a magnetic bubble garnet layer having a composition based on yttrium iron garnet or on bismuth yttrium iron garnet.

Substrate 1 having layers of stack 2 serves as a reflector for the magneto-optically active layer 3. A magnetic bubble 4 in the layer 3 can be detected by means of a detector, system consisting of a laser source 5, a lens system 6, 7 to focus the radiation of the laser source 5, a polarizer 8, an analyser 9, a semi-transparent mirror 10 and a detector 20.

In this case detection is carried out from the front of the substrate 1. However, it is also possible to perform the detection from the rear side of the substrate, i.e. through the substrate. An optical component which is suitable for that purpose is shown diagrammatically in Figure 3. Substrate 1 and stack 2 of layers 11—16 are the same as in Figures 1 and 2, only in this case an epitaxial monocrystalline garnet layer 3 having magneto-optically active properties is provided between the substrate 1 and the stack 2. Electromagnetic radiation I is incident via substrate 1, passes through layer 3, is reflected partly by the stack 2 of 1/4 λ layers dependent on the number of layers of the stack 2, passes again through layer 3 and can be detected on the free side of the substrate. The magneto-optically active layer 3 may optionally be present between a sub-stack 2 having reflecting properties and a sub-stack 2' having anti-reflecting properties.

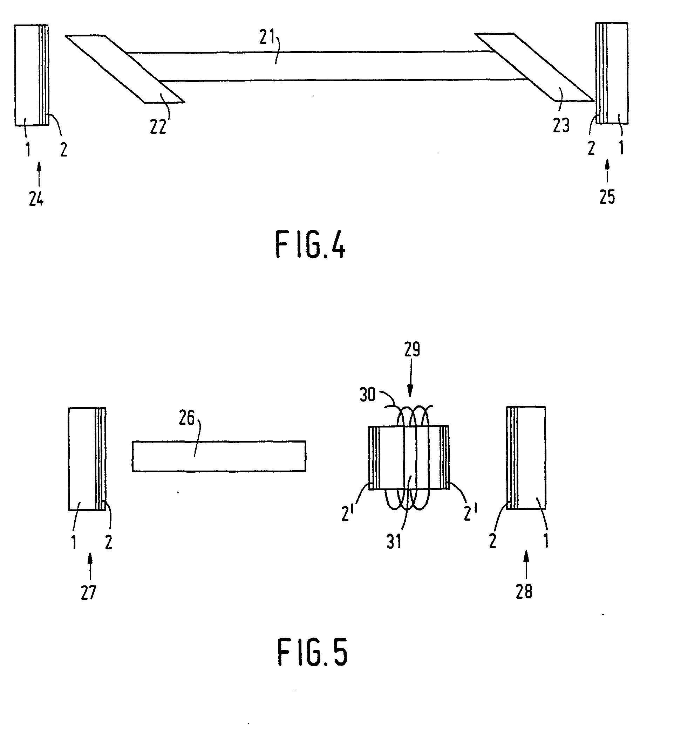

Figure 4 shows a first type of laser arrangement in which a discharge tube 21 which comprises a Brewster angle window 22, 23 at each end is placed between two mirrors 24, 25. The mirrors 24 and 25 are optical components according to the invention and each consist of a monocrystalline substrate 1 on which a stack 2 of monocrystalline epitaxial garnet layers of alternately a high and a low refractive index is grown. The thicknesses and the refractive indices are optimised for maximum reflection of the radiation of the discharge tube 21.

Figure 5 shows a second type of laser arrangement. In this case a discharge tube 26 is placed between two mirrors 27, 28 each formed by reflecting optical components according to the invention. In this case a resonant cavity 29 with a magneto-optically active element 31 surrounded by a coil 30 is present between the discharge tube 26 and the mirror 28. Since the highest energies of the present laser system are handled in the resonant cavity 29 it is of great importance for the ends of the magneto-optically active element to have anti-reflecting properties for the radiation of the discharge tube 26. For this purpose the ends of element 31, which is based, for example, on the use of a monocrystalline garnet substrate, each comprise a stack 2' consisting of monocrystalline epitaxial garnet layers having refractive indices and thicknesses which are optimised to minimally reflect radiation of the discharge tube 26.

## Claims

1. A multilayer optical component in thin-film technology for handling electromagnetic radiation in the visible and/or infrared spectral range which is incident transversely to the plane of the component, having a substrate which supports a stack of thin-film layers having alternately a high and a low refractive index, characterized in that the substrate is a monocrystalline substrate having a lattice constant $a_0$ and that the stack of thin-film layers consists of a number of monocrystalline layers grown epitaxially on the substrate and having a lattice constant which is substantially equal to $a_0$.

2. An optical component as claimed in Claim 1, characterized in that the monocrystalline layers which, taken from the substrate, have an even number consist of the same material as the substrate.

3. An optical component as claimed in Claim 1 or 2, characterized in that the substrate and the monocrystalline layers grown epitaxially on the substrate consist of a monocrystalline material having a garnet structure.

4. An optical component as claimed in Claim 3, characterized in that the substrate is of gadolinium gallium garnet.

5. An optical component as claimed in Claim 4, characterized in that the monocrystalline garnet layers having an odd number when taken from the substrate consist of a material based on yttrium iron garnet and the layers having an even number when taken from the substrate consist of gadolinium gallium garnet for handling electromagnetic radiation in the infrared spectral range.

6. An optical component as claimed in Claim 4, characterized in that the monocrystalline garnet layers having an odd number when taken from the substrate consist of a material based on $Y_3Al_3Sc_2O_{12}$ and the monocrystalline layers having an even number when taken from the substrate consist of gadolinium gallium garnet for handling electromagnetic radiation in the visible spectral range.

7. An optical component as claimed in any of the Claims 3 to 6, characterized in that the stack of monocrystalline garnet layers adjoins the substrate and that a magneto-optically active, epitaxial monocrystalline layer is provided on the side of the stack remote from the substrate.

8. An optical component as claimed in any of the Claims 3 to 6, characterized in that the substrate supports an epitaxial magneto-optically active monocrystalline garnet layer and that the stack of monocrystalline garnet layers is grown epitaxially on the magneto-optically active garnet layer.

9. An optical component as claimed in any of the Claims 3 to 6, characterized in that the substrate supports an epitaxial magneto-optically active monocrystalline garnet layer which is enclosed between a first stack of monocrystalline garnet layers having thicknesses which are optimised for reflection of electromagnetic radiation of a given wavelength and a second sub-stack of monocrystalline garnet layers having thicknesses which are optimised for anti-reflection of electromagnetic radiation of the said given wavelength.

10. A laser comprising at least one optical component as claimed in any of the preceding Claims.

## Patentansprüche

1. Optisches Mehrschichtensystem in Dünnfilmtechnik zum Behandeln quer zu der Ebene des Systems eintreffender elektromagnetischer Strahlung in dem optischen und/oder infraroten Spektralbereich, mit einem Substrat, das eine Stapelung dünner Filmschichten mit einer abwechselnd hohen bzw, niedrigen Brechzahl trägt, dadurch gekennzeichnet, dass das Substrat ein monokristalines Substrat mit einer Gitterkonstante $a_0$ ist und dass die Stapelung von Dünnfilmschichten aus einer Anzahl epitaxial auf dem Substrat aufgewachsener monokristalliner Schichten mit einer dem Wert $a_0$ nahezu entsprechenden Gitterkonstante besteht.

2. Optisches System nach Anspruch 1, dadurch gekennzeichnet, dass die, von dem Substrat gerechnet, geradzahligen monokristallinen Schichten aus demselben Material wie das Substrat bestehen.

3. Optisches System nach Anspruch 1 oder 2, dadurch gekennzeichnet, dass das Substrat und die epitaxial auf dem Substrat aufgewachsenen monokristallinen Schichten aus monokristallinem Material mit Granatstruktur bestehen.

4. Optisches System nach Anspruch 3, dadurch gekennzeichnet, dass das Substrat aus Gadolinium-Gallium-Granat besteht.

5. Optisches System nach Anspruch 4, dadurch gekennzeichnet, dass die, von dem Substrat gerechnet, ungeradzahligen monokristallinen Granatschichten aus einem Material auf Basis von Yttrium-Eisen-Granat bestehen und die, von dem Substrat gerechnet, geradzahligen Schichten aus Gadolinium-Gallium-Granat bestehen, und zwar zum Behandeln elektromagnetischer Strahlung im infraroten Spektralbereich.

6. Optisches System nach Anspruch 4, dadurch gekennzeichnet, dass die, von dem Substrat gerechnet, ungeradzahligen monokristallinen Granatschichten aus einem Material auf Basis von $Y_3Al_3Sc_2O_{12}$ bestehen und die, von dem Substrat gerechnet, geradazahligen Schichten aus Gadolinium-Gallium-Granat bestehen, und zwar zum Behandeln elektromagnetischer Strahlung im optischen Spektralbereich.

7. Optisches System nach einem der Ansprüche 3 bis 6, dadurch gekennzeichnet, dass der Stapel monokristalliner Granatschichten an das Substrat grenzt und dass auf der von dem Substrat abgewandten Seite des Stapels eine magnetooptisch aktive, epitaxiale, monokristalline Granatschicht vorgesehen ist.

8. Optisches System nach einem der Ansprüche 3 bis 6, dadurch gekennzeichnet, dass das Substrat eine epitaxiale, magnetooptisch aktive, monokristalline Granatschicht trägt und dass der Stapel monokristalliner Granatschichten auf der magnetooptisch aktiven Granatschicht epitaxial aufgewachsen ist.

9. Optisches System nach einem der Ansprüche 3 bis 6, dadurch gekennzeichnet, dass das Substrat eine epitaxiale, magnetooptisch aktive, monokristalline Granatschicht trägt, die eingeschlossen liegt zwischen einem ersten Stapel monokristalliner Granatschichten mit Dicken, die für Reflexion elektromagnetischer Strahlung einer bestimmten Wellenlänge optimalisiert sind, und einem zweiten Nebenstapel monokristalliner Granatschichten mit Dicken, die für Antireflexion elektromagnetischer Strahlung der genannten bestimmten Wellenlänge optimalisiert sind.

10. Laser mit mindestens einem optischen System nach einem der vorstehenden Ansprüche.

**Revendications**

1. Composant optique multicouche dans la technologie des couches minces pour le traitement de rayonnement électromagnétique dans la gamme spectrale visible et/ou infrarouge parvenant transversalement au plan du composant, comportant un substrat qui supporte une pile de couches minces présentant alternativement un indice de réfraction élevé et un indice de réfraction bas, caractérisé en ce que le substrat est un substrat monocristallin présentant une constante de réseau $a_0$ et que la pile de couches minces est constituée par plusieurs couches monocristallines qui sont formées par croissance épitaxiale sur le substrat et présentent une constante de réseau qui est pratiquement égale à $a_0$.

2. Composant optique selon la revendication 1, caractérisé en ce que vues à partir du substrat, les couches monocristallines présentant un numéro pair sont constituées par le même matériau que le substrat.

3. Composant optique selon la revendication 1 ou 2, caractérisé en ce que le substrat et les couches monocristallines formées par croissance épitaxiale sur le substrat sont constitués par un matériau monocristallin présentant une structure de grenat.

4. Composant optique selon la revendication 3, caractérisé en ce que le substrat est en grenat de gallium-gadolinium.

5. Composant optique selon la revendication 4, caractérisé en ce que vues à partir du substrat, les couches de grenat monocristallines présentant un numéro impair sont constituées par un matériau à base de grenat de fer yttrium et vues à partir du substrat les couches présentant, un numéro pair sont constituées par du grenat de gallium-gadolinium pour le traitement de rayonnement électromagnétique dans la gamme spectrale infrarouge.

6. Composant optique selon la revendication 4, caractérisé en ce que vues à partir du substrat, les couches de grenat monocristallines présentant un numéro impair sont constituées par un matériau à base de $Y_3Al_3Sc_2O_{12}$ et vues à partir du substrat, les couches monocristallines présentant un numéro pair sont constituées par du grenat de gallium-gadolinium pour le traitement du rayonnement électromagnétique dans la gamme spectrale visible.

7. Composant optique selon l'une des revendications 3 à 6, caractérisé en ce que la pile de couches de grenat monocristallines confine au substrat et que la couche monocristalline épitaxiale magnéto-optique est appliquée du côté de la pile opposé au substrat.

8. Composant optique selon l'une des revendications 3 à 6, caractérisé en ce que le substrat supporte une couche de grenat monocristalline magnéto-optiquement active épitaxiale et que la pile de couches de grenat monocristallines est formée par croissance épitaxiale sur la couche de grenat magnéto-optiquement active.

9. Composant optique selon l'une des revendications 3 à 6, caractérisé en ce que le substrat supporte une couche de grenat monocristalline magnéto-optiquement active épitaxiale qui est enfermée entre une première pile de couches de grenat monocristallines présentant des épaisseurs qui sont optimalisées pour la réflexion de rayonnement électro-magnétique d'une longueur d'onde déterminée et une seconde sous-pile de couches de grenat monocristallines présentant des épaisseurs qui sont optimalisées pour l'anti-réflexion de rayonnement électro-magnétique de ladite longueur d'onde déterminée.

10. Laser comprenant au moins un composant optique selon l'une des revendications précédentes.

FIG.1

FIG.2

FIG.3

FIG.4

FIG.5